# EUROPEAN PATENT SPECIFICATION

(11) **EP 4 341 046 B1**
(45) Date of publication and mention of the grant of the patent: **29.10.2025**
(21) Application number: 22726635.0
(22) Date of filing: 29.04.2022
(51) Int. Cl.: B25B 23/147, G01L 5/24

(54) **A POWER TOOL WITH WIRELESS SIGNAL TRANSFER CAPABILITY**
ELEKTROWERKZEUG MIT DRAHTLOSSIGNALÜBERTRAGUNGSFÄHIGKEIT
OUTIL ÉLECTRIQUE AVEC CAPACITÉ DE TRANSFERT DE SIGNAL SANS FIL

(30) Priority: 17.05.2021 SE 2130131
(43) Date of publication of application: 27.03.2024
(73) Proprietor: Atlas Copco Industrial Technique AB, 105 23 Stockholm (SE)
(72) Inventor: KAZEMI, Niloofar, 13134 Nacka (SE); RIMEIKA, Alfonsas Jonas, 13563 Tyresö (SE)
(74) Representative: Atlas Copco Industrial Technique AB
(86) International application number: PCT/EP2022/061484
(87) International publication number: WO 2022/243011

(56) References cited:
- EP-A1- 2 726 253
- EP-A2- 2 246 680
- US-A1- 2012 325 507
- US-A1- 2016 091 343
- US-A1- 2016 276 871
- US-A1- 2020 198 104
- US-A1- 2020 294 714

## Description

### TECHNICAL FIELD

The present disclosure generally relates to power tools.

### BACKGROUND

Industrial power tools such as nutrunners are widely used in the manufacturing industry, e.g. in vehicle manufacturing and the aerospace industry. Power tools of this type typically have a tool head which interacts with the work piece and a main body which is held by the user when operating the power tool. The main body may alternatively form part of a robot.

Manufacturing processes usually require high precision control of the torque applied by the power tool. The power tools therefore typically comprise a torque transducer configured to measure the applied torque. The torque transducer may be provided in the tool head or the main body, or in both.

The torque transducer may for example comprise a strain gauge arranged on a rotating part in the power tool. Slip rings may be used for conveying the measurement signal by the strain gauge to stationary components. WO2019201589 A1 discloses a power tool of this type. One potential drawback with this configuration is that the measurement signal may be subjected to noise as the slip ring degrades over time.

US 2020198104 A1 discloses an electromechanical tool including a casing, a shaft driving a tip in rotation and a rotary transformer. The rotating shaft integrates an electronic circuit configured to measure a physical parameter of the shaft, and the rotary transformer includes a stator fixedly attached to the casing and a rotor affixed to the rotating shaft. The stator integrates a first coil and a first support of this first coil, and the rotor integrates a second coil and a second support of this second coil. The supports are made out of plasto-ferrite material.

### SUMMARY

In view of the above, an object of the present disclosure is to provide a power tool which solves, or at least mitigates, the problems of the prior art.

There is hence provided a power tool comprising a housing, a stationary part, which is stationary relative to the housing, a rotatable part, which is rotatable about a rotation axis relative to the stationary part, and a rotary transformer comprising: a stator attached to the stationary part, the stator comprising a stator coil structure; and a rotor attached to the rotatable part, the rotor comprising a rotor coil structure inductively coupled with the stator coil structure, wherein the rotor coil structure and the stator coil structure are arranged with an air gap between them in a direction along the rotation axis, wherein the stationary part comprises stationary electronic circuitry connected to the stator coil structure and the rotatable part comprises rotating electronic circuitry connected to the rotor coil structure.

Data transfer and/or power transfer between the stator coil structure and the rotor coil structure may thereby be provided wirelessly. The risk of signal degradation over time may thus be reduced.

Further, the inventors have found that the durability of the stator and the rotor increases by arranging the air gap in the direction of the rotation axis instead of in the radial direction. Components in the stator and the rotor may crack if the layers they are formed of are flexed or bent. By placing the rotor coil structure and the stator coil structure with the airgap along the rotation axis, the layers can be arranged in spaced apart radial planes without flexing or bending. This also facilitates the manufacturing process.

Further, the rotating electronic circuitry comprises a sensor and a modulator circuit, wherein the modulator circuit is configured to modulate a measurement signal received from the sensor to obtain a modulated measurement signal, and to provide the modulated measurement signal to the rotor coil structure to induce the modulated measurement signal in the stator coil structure.

Further, the stationary electronic circuitry comprises a power transfer circuit configured to generate a power signal and to energise the stator coil structure with the power signal to induce a power signal in the rotor coil structure for powering the rotating electronic circuity.

Further, the rotating electronic circuitry comprises: a voltage sensor configured to measure a rectified voltage of the induced power signal in the rotor coil structure, wherein in case the rectified voltage measured by the voltage sensor is below a threshold value the modulator circuit is configured to generate a modulated voltage sensor measurement signal and feed it to the rotor coil structure to induce the modulated voltage sensor measurement signal in the stator coil structure; and control circuitry connected to the stator coil structure, wherein the control circuitry is configured to control the power transfer circuit to increase a signal strength of the power signal in response to receiving the voltage sensor measurement signal from the stator coil structure.

The rectified voltage may provide a measure of the air gap. A decrease in the rectified voltage may be an indication that the air gap has widened. This could for example potentially occur due to vibrations or due to an impact to the power tool. As the signal strength of the power signal is increased in response to receiving the voltage sensor measurement signal from the stator coil structure, an increase in the air gap may be compensated for.

The sensor may e.g. be a torque transducer, an angle sensor or a force measurement sensor.

The power tool may for example be a nutrunner.

According to one embodiment the stator comprises a stator carrier and a stator screen layer, wherein the stator screen layer is arranged between the stator coil structure and the stator carrier.

The stator screen layer concentrates the magnetic flux and reduces magnetic losses.

According to one embodiment the stator screen layer is a first ferrite sheet. The first ferrite sheet may for example be a first ferrite tape.

The first ferrite tape may be especially sensitive and crack if bent. The configuration with the air gap in the direction of the rotation axis eliminates the risk of cracks, because the first ferrite tape can be arranged planar in a radial plane on the stationary part around the rotatable part.

The first ferrite sheet may for example have a relative permeability of at least 100.

According to one embodiment the rotor comprises a rotor carrier and a rotor screen layer, wherein the rotor screen layer is arranged between the rotor coil structure and the rotor carrier.

The rotor screen layer concentrates the magnetic flux and reduces magnetic losses.

According to one embodiment the rotor screen layer is a second ferrite sheet. The second ferrite sheet may for example be a second ferrite tape.

The second ferrite tape may be especially sensitive and crack if bent. The configuration with the air gap in the direction of the rotation axis eliminates the risk of cracks, because the second ferrite tape can be arranged planar in a radial plane offset from that of the first ferrite tape, around the rotatable part.

The second ferrite sheet may for example have a relative permeability of at least 100.

According to one embodiment the stator is annular and receives the rotatable part, wherein the stator coil structure comprises a spiral coil extending with a plurality of turns spiralling radially outwards around the rotatable part.

According to one embodiment the stator coil structure forms part of a first flexible printed circuit board, PCB.

According to one embodiment the rotor is annular and extends around the rotatable part, wherein the rotor coil structure comprises a spiral coil extending with a plurality of turns spiralling radially outwards around the rotatable part.

According to one embodiment the rotor coil structure forms part of a second flexible PCB.

According to one embodiment each of the stator coil structure and the rotor coil structure has an inductance of at least 5 µH. The inductance may for example be at least 10 µH.

An inductance of at least 5 µH of each of the stator coil structure and the rotor coil structure improves data transfer between the stator and the rotor. However, in case the inductance is too high, the communications bandwidth will be reduced. The inductance may for example be smaller than 500 µH, such as smaller than 250 µH, such as smaller than 100 µH.

According to one embodiment the stationary electronic circuitry comprises a demodulator circuit configured to demodulate the modulated measurement signal induced in the stator coil structure by the rotor coil structure.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc.", unless explicitly stated otherwise.

### BRIEF DESCRIPTION OF THE DRAWINGS

The specific embodiments of the inventive concept will now be described, by way of example, with reference to the accompanying drawings, in which:
Fig. 1 shows a perspective view of an example of a power tool;
Fig. 2 shows the power tool in Fig. 1 with a portion of its housing removed to expose interior components;
Fig. 3 shows a detail of the power tool, including a rotary transformer, a stationary part, and a rotatable part;
Fig. 4 shows a perspective view of a detail including the rotary transformer;
Figs 5a-5c show various views of an example of a rotary transformer; and
Fig. 6 schematically shows a circuit diagram of the rotary transformer, rotating electronic circuitry and stationary electronic circuitry.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

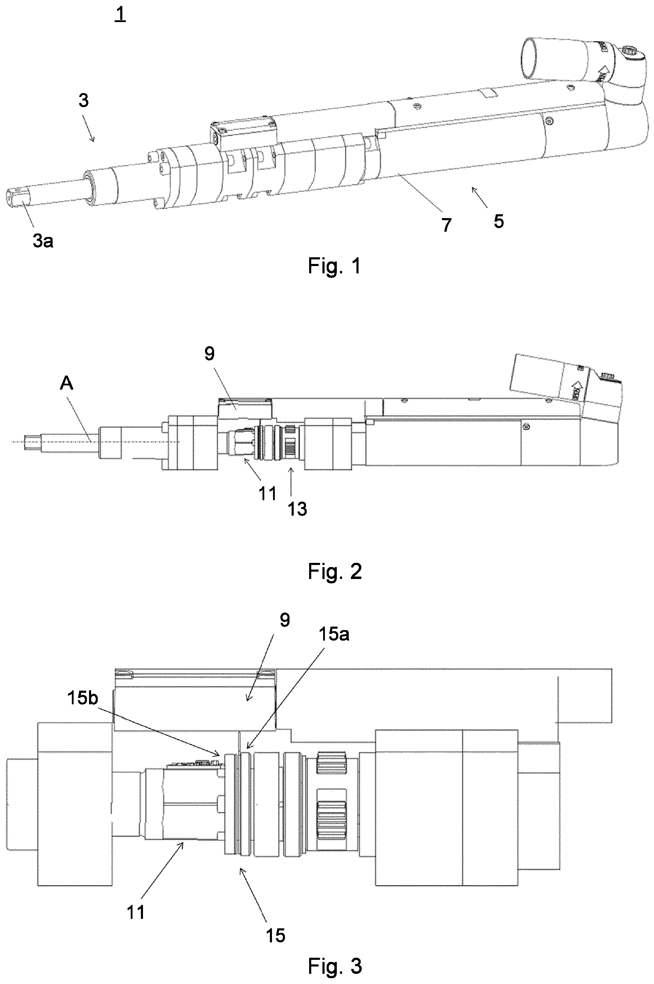

Fig. 1 shows an example of a power tool 1. The power tool 1 may for example be a nutrunner.

The power tool 1 has a tool head 3 and a main body 5. The tool head 3 is attached to the main body 5. The tool head 3 is straight but could alternatively be angled.

The tool head 3 has an output shaft 3a. The output shaft 3a is configured to be rotatably driven and engage with a fastener such as a nut.

The power tool 1 has a housing 7. The power tool 1 comprises an electric motor configured to drive the output shaft 3a. The electric motor is arranged in the housing 7.

Fig. 2 shows the power tool 1 with a portion of its housing 7 removed to partly expose its interior.

The power tool 1 comprises a stationary part 9. The stationary part 9 is stationary relative to the housing 7.

The power tool 1 comprises a rotatable part 11. The rotatable part is configured to be rotated about a rotational axis A relative to the stationary part 9. The rotational axis A is an axis about which the electric motor provides rotation. The rotational axis A may be the rotor axis of the electric motor or it may be at an angle relative to the rotor axis, for example provided by a crown wheel.

The rotatable part 11 may comprise a gear train 13 rotatably connecting the output shaft 3a to the electric motor.

Fig. 3 shows a close-up view of a portion of the region indicating the stationary part 9 and the rotatable part 11 in Fig. 2, with other components removed for reasons of clarity.

The power tool 1 comprises a rotary transformer 15. The rotary transformer 15 comprises a stator 15a that is attached to the stationary part 9. The stator 15a is fixedly arranged relative to the stationary part 9.

The rotary transformer 15 comprises a rotor 15b attached to the rotatable part 11. The rotatable part is fixedly arranged relative to the rotatable part 11. The rotor 15b thus rotates together with the rotatable part 11.

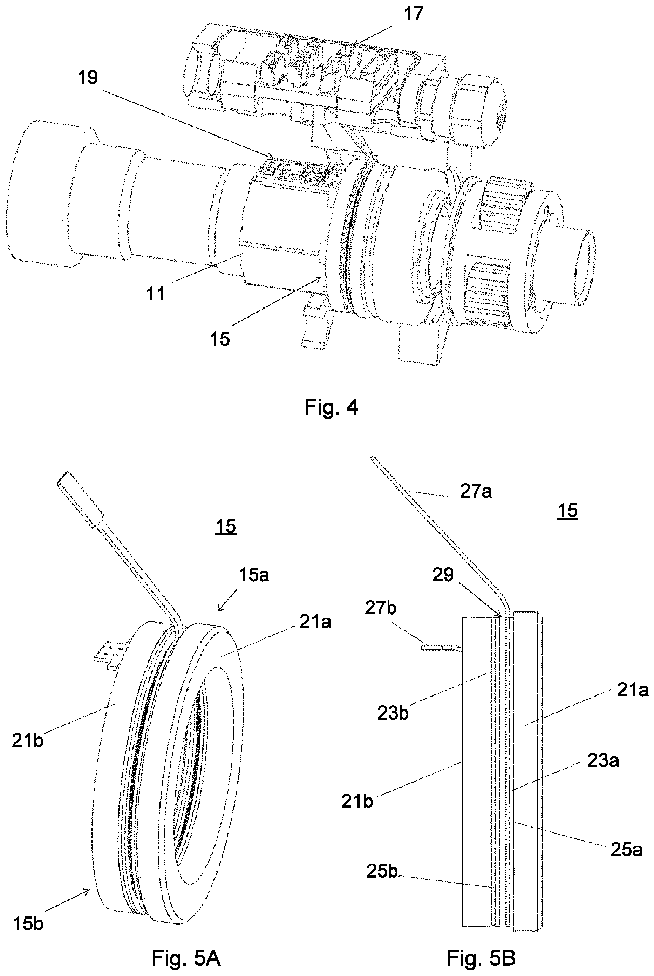

Fig. 4 shows the components around the rotary transformer 15 in more detail. The stationary part 9 comprises a stationary electronic circuitry 17 and the rotatable part 11 comprises rotating electronic circuitry 19.

The stationary electronic circuitry 17 is configured to power the rotating electronic circuitry 19 via the rotary transformer 15.

The stationary electronic circuitry 17 and the rotating electronic circuitry 19 are configured to communicate with each other via the rotary transformer 15, as will be explained in more detail in the following.

Figs 5a-5c show various views of the rotary transformer 15.

The stator 15a comprises a stator carrier 21a. The stator carrier 21a is annular and configured to receive the rotatable part 11 by means of its through-opening.

The stator carrier 21a may for example comprise metal such as stainless steel, or a polymeric material.

As better seen in Fig. 5b, the stator 15a comprises a stator screen layer 23a and a stator coil layer 25a.

The stator screen layer 23a may for example be a first ferrite sheet. The first ferrite sheet may for example be a first ferrite tape.

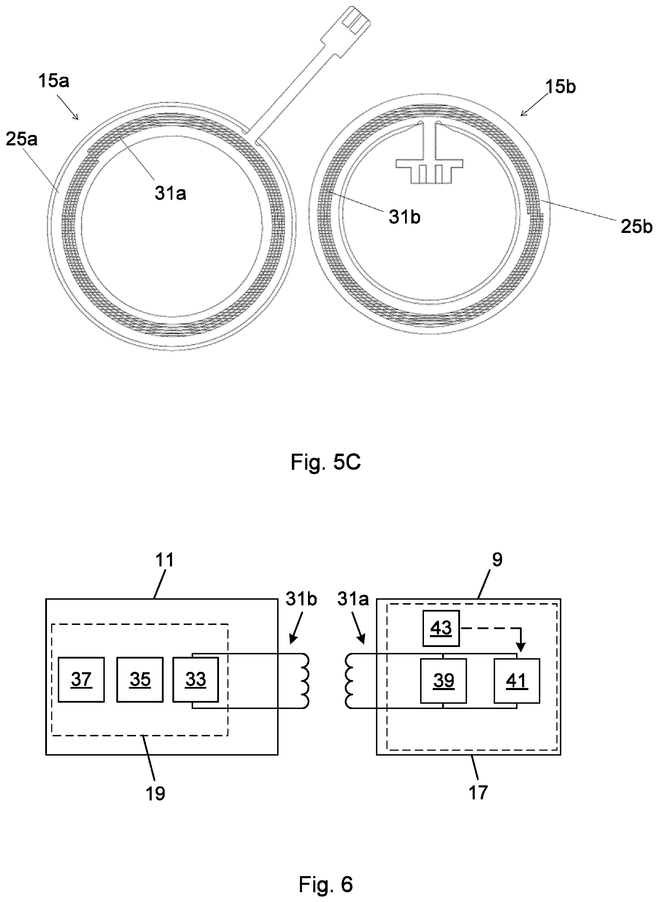

The stator coil layer 25a is provided with a stator coil structure 31a, shown in Fig. 5c. The stator coil structure 31a is in the example a single stator coil. The stator coil layer 25a may for example be formed by a first flexible or standard PCB. The stator coil structure 31a is a spiral coil extending with a plurality of turns spiralling radially outwards around the rotatable part 11.

The stator screen layer 23a is arranged between the stator carrier 21a and the stator coil layer 25a. The stator screen layer 23a is thus arranged between the stator coil structure 31a and the stator carrier 21a.

The stator 15a comprises a stator connection 27a which electrically connects the stator coil structure 31a to the stationary electronic circuitry 17.

The stator carrier 21a may be fixedly attached to the stationary part 9.

The rotor 15b comprises a rotor carrier 21b. The rotor carrier 21b is annular and extends around the rotatable part 11.

The rotor carrier 21b may for example comprise metal such as stainless steel, or a polymeric material.

The rotor 15b comprises a rotor screen layer 23b and a rotor coil layer 25b.

The rotor screen layer 23b may for example be a second ferrite sheet. The second ferrite sheet may for example be a second ferrite tape.

The rotor coil layer 25b is provided with a rotor coil structure 31b. The rotor coil structure 31b is in the example a single rotor coil. The rotor coil layer 25b may for example be formed by a second flexible or standard PCB. The rotor coil structure 31b is a spiral coil extending with a plurality of turns spiralling radially outwards around the rotatable part 11.

The rotor screen layer 23b is arranged between the rotor carrier 21b and the rotor coil layer 25b. The rotor screen layer 23b is thus arranged between the rotor coil structure 31b and the rotor carrier 21b.

The rotor 15b comprises a rotor connection 27b which electrically connects the rotor coil structure 31b to the rotating electronic circuitry 19.

The rotor carrier 21b may be fixedly attached to the rotatable part 11.

The stator coil structure 31a and the rotor coil structure 31b are inductively coupled to each other.

The stator coil structure 21a and the rotor coil structure 31b are arranged with an airgap 29 between them. The airgap 29 is an axial airgap and thus defines a spacing between the stator coil structure 21a and the rotor coil structure 31b in a direction along the rotation axis A.

Fig. 6 schematically shows a circuit diagram of the rotary transformer 15, the rotating electronic circuitry 19 and the stationary electronic circuitry 17.

The rotating electronic circuitry 19 comprises a modulator circuit 35 and a sensor 37.

The modulator circuit 35 is electrically connected to the rotor coil structure 31b.

The modulator circuit 35 is configured to send signals such as measurement signals from the rotating electronic circuitry 19 to the stationary electronic circuitry 17.

The sensor 37 is electrically connected to the modulator circuit 35.

The sensor 37 may for example be a torque transducer, an angle sensor or a force measurement sensor. The sensor 37 may thus, for example, be configured to measure a torque, an angle, or a force related to rotation of the rotatable part 11.

The sensor 37 is configured to send measurement signals to the modulator circuit 35. The modulator circuit 35 is configured to modulate the measurement signal received from the sensor 37 to obtain a modulated measurement signal. Further, the modulator circuit 35 is configured to feed the modulated measurement signal to the rotor coil structure 31b to induce the modulated measurement signal in the stator coil structure 31a.

The modulator circuit 35 may for example be configured to perform modulation using amplitude-shift keying (ASK) modulation. The ASK modulation may for example be on-off keying (OOK) modulation.

The stationary electronic circuitry 17 comprises a power transfer circuit 39 and a stator side-demodulator circuit 41.

The demodulator circuit 41 is connected to the stator coil structure 31a and configured to demodulate the modulated measurement signal induced in the stator coil structure 31a by the rotor coil structure 31a, to recover the measurement signal.

The power transfer circuit 39 is configured to energise the stator coil structure 31a with a power signal to provide wireless power transfer to the rotating electronic circuitry 19 via the rotor coil structure 31b.

The power transfer circuit 39 may for example comprise switching circuit, such as a flyback converter, an H-bridge or a class-E amplifier. The switching circuit is configured to generate the power signal by switching a voltage, which when induced in the rotor coil structure 31b can drive the rotating electronic circuitry 19.

The rotating electronic circuitry 19 may comprise a rectifier (not shown) configured to rectify the power signal induced in the rotor coil structure 31b by the stator coil structure 31a. The rectified voltage is used to power the rotating electronic circuitry 19, such as the modulator circuit 35.

The rotating electronic circuitry 17 may comprise a voltage sensor 33. The voltage sensor 33 is configured to measure the rectified voltage of the rotor coil structure 31b induced by the stator coil structure 31a when the stator coil structure 31a is fed with the power signal. The rectified voltage provides a measure of the air gap 29. A decrease in the rectified voltage is an indication that the air gap 29 has widened. This could for example potentially occur due to vibrations or due to an impact to the power tool 1.

The modulator circuit 35 is configured to generate a modulated voltage sensor measurement signal based on measurement of the rectified voltage and feed it to the rotor coil structure 31b to induce the modulated voltage sensor measurement signal in the stator coil structure 31a if the rectified voltage measured by the voltage sensor 33 falls below a threshold value.

The stationary electronic circuitry 17 may comprise control circuitry 43 configured to control the power transfer circuit 41 to increase the signal strength of the power signal in response to receiving the voltage sensor measurement signal from the stator coil structure 31a. An increase in the air gap 29 may thereby be compensated for.

The same rotor coil structure 31b and stator coil structure 31a may for example be used for transmission of measurement signals by the sensor 37, for voltage measurement signals by the voltage sensor 33, and for power signals. The signals are preferably transmitted alternatingly and not simultaneously. Thus, for a first period of time, only the power signal may be transmitted, and for a second period of time only a measurement signal may be transmitted, followed by only the power signal and so on.

As an alternative to having a single stator coil, the stator coil structure may comprise two stator coils, one for the power signal transfer and one for receiving measurement signals. The rotor coil structure may in this case instead of a single rotor coil comprise two rotor coils, one for the power signal reception and one for the measurement signal transmission. In this case, the two stator coils may be provided in different stator coil layers or in the same stator coil layer. The two rotor coils may be provided in different rotor coil layers or in the same rotor coil layer.

According to another variation, the power tool may comprise two rotary transformers of the type disclosed herein, one handling power signal transmission and the other handling measurement signal transmission.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A power tool (1) comprising:
- a housing (7),
- a stationary part (9), which is stationary relative to the housing (7),
- a rotatable part (11), which is rotatable about a rotation axis (A) relative to the stationary part (9), and
- a rotary transformer (15) comprising:
a stator (15a) attached to the stationary part (11), the stator (15a) comprising a stator coil structure (31a), and
a rotor (15b) attached to the rotatable part (11), the rotor (15b) comprising a rotor coil structure (31b) inductively coupled with the stator coil structure (31a),
**characterized in that**:
the rotor coil structure (31b) and the stator coil structure (31a) are arranged with an air gap (29) between them in a direction along the rotation axis (A),
the stationary part (9) comprises stationary electronic circuitry (17) connected to the stator coil structure (31a) and the rotatable part (11) comprises rotating electronic circuitry (19) connected to the rotor coil structure (31b),
the rotating electronic circuitry (19) comprises a sensor (37) and a modulator circuit (35), wherein the modulator circuit (35) is configured to modulate a measurement signal received from the sensor (37) to obtain a modulated measurement signal, and to provide the modulated measurement signal to the rotor coil structure (31b) to induce the modulated measurement signal in the stator coil structure (31a),
the stationary electronic circuitry (17) comprises a power transfer circuit (41) configured to generate a power signal and to energise the stator coil structure (31a) with the power signal to induce a power signal in the rotor coil structure (31b) for powering the rotating electronic circuity (19), and
the rotating electronic circuitry (19) comprises:
a voltage sensor (33) configured to measure a rectified voltage of the induced power signal in the rotor coil structure (31b), wherein in case the rectified voltage measured by the voltage sensor (33) is below a threshold value the modulator circuit (35) is configured to generate a modulated voltage sensor measurement signal and feed it to the rotor coil structure (31b) to induce the modulated voltage sensor measurement signal in the stator coil structure (31a), and
control circuitry (43) connected to the stator coil structure (31a), wherein the control circuitry (43) is configured to control the power transfer circuit (41) to increase a signal strength of the power signal in response to receiving the voltage sensor measurement signal from the stator coil structure (31a).

2. The power tool (1) as claimed in claim 1, wherein the stator (15a) comprises a stator carrier (21a) and a stator screen layer (23a), wherein the stator screen layer (23a) is arranged between the stator coil structure (35a) and the stator carrier (21a).

3. The power tool (1) as claimed in claim 2, wherein the stator screen layer (23a) is a first ferrite sheet.

4. The power tool (1) as claimed in any of the preceding claims, wherein the rotor (15a) comprises a rotor carrier (21b) and a rotor screen layer (23b), wherein the rotor screen layer (23b) is arranged between the rotor coil structure (31b) and the rotor carrier (21b).

5. The power tool (1) as claimed in claim 4, wherein the rotor screen layer (23b) is a second ferrite sheet.

6. The power tool (1) as claimed in any of the preceding claims, wherein the stator (15a) is annular and receives the rotatable part (11), wherein the stator coil structure (31a) comprises a spiral coil extending with a plurality of turns spiralling radially outwards around the rotatable part (11).

7. The power tool (1) as claimed in any of the preceding claims, wherein the stator coil structure (31a) forms part of a first flexible printed circuit board, PCB.

8. The power tool (1) as claimed in any of the preceding claims, wherein the rotor (15b) is annular and extends around the rotatable part (11), wherein the rotor coil structure (31b) comprises a spiral coil extending with a plurality of turns spiralling radially outwards around the rotatable part (11).

9. The power tool (1) as claimed in any of the preceding claims, wherein the rotor coil structure (31b) forms part of a second flexible PCB.

10. The power tool (1) as claimed in any of the preceding claims, wherein each of the rotor coil structure (31b) and the stator coil structure (31a) has an inductance of at least 5 µH.

11. The power tool (1) as claimed in any one of the preceding claims, wherein the stationary electronic circuitry (17) comprises a demodulator circuit configured to demodulate the modulated measurement signal induced in the stator coil structure (31a) by the rotor coil structure (31b).

## Patentansprüche

1. Elektrowerkzeug (1), umfassend:
- ein Gehäuse (7),
- einen stationären Teil (9), der relativ zu dem Gehäuse (7) stationär ist,
- einen drehbaren Teil (11), der relativ zu dem stationären Teil (9) um eine Drehachse (A) drehbar ist, und
- einen Drehtransformator (15), umfassend:
einen Stator (15a), der an dem stationären Teil (11) befestigt ist, wobei der Stator (15a) eine Statorspulenstruktur (31a) umfasst, und
einen Rotor (15b), der an dem drehbaren Teil (11) befestigt ist, wobei der Rotor (15b) eine Rotorspulenstruktur (31b) umfasst, die mit der Statorspulenstruktur (31a) induktiv gekoppelt ist,
**dadurch gekennzeichnet, dass**
die Rotorspulenstruktur (31b) und die Statorspulenstruktur (31a) mit einem Luftspalt (29) dazwischen in einer Richtung entlang der Drehachse (A) angeordnet sind,
der stationäre Teil (9) eine stationäre elektronische Schaltung (17) umfasst, die mit der Statorspulenstruktur (31a) verbunden ist, und der drehbare Teil (11) eine drehende elektronische Schaltung (19) umfasst, die mit der Rotorspulenstruktur (31b) verbunden ist,
wobei die drehende elektronische Schaltung (19) einen Sensor (37) und eine Modulatorschaltung (35) umfasst, wobei die Modulatorschaltung (35) dazu konfiguriert ist, ein von dem Sensor (37) empfangenes Messsignal zu modulieren, um ein moduliertes Messsignal zu erhalten, und das modulierte Messsignal der Rotorspulenstruktur (31b) bereitzustellen, um das modulierte Messsignal in der Statorspulenstruktur (31a) zu induzieren,
wobei die stationäre elektronische Schaltung (17) eine Leistungsübertragungsschaltung (41) umfasst, die dazu konfiguriert ist, ein Leistungssignal zu erzeugen und die Statorspulenstruktur (31a) mit dem Leistungssignal zu speisen, um in der Rotorspulenstruktur (31b) ein Leistungssignal zum Versorgen der drehenden elektronischen Schaltung (19) mit Leistung zu induzieren, und
die drehende elektronische Schaltung (19) umfasst:
einen Spannungssensor (33), der dazu konfiguriert ist, eine Richtspannung des induzierten Leistungssignals in der Rotorspulenstruktur (31b) zu messen, wobei die Modulatorschaltung (35) dazu konfiguriert ist, ein moduliertes Spannungssensormesssignal zu erzeugen, falls die durch den Spannungssensor (33) gemessene Richtspannung unter einem Schwellenwert liegt, und es der Rotorspulenstruktur (31b) zuzuführen, um das modulierte Spannungssensormesssignal in der Statorspulenstruktur (31a) zu induzieren, und
eine Steuerschaltung (43), die mit der Statorspulenstruktur (31a) verbunden ist, wobei die Steuerschaltung (43) dazu konfiguriert ist, die Leistungsübertragungsschaltung (41) zu steuern, um eine Signalstärke des Leistungssignals als Reaktion auf das Empfangen des Spannungssensormesssignals von der Statorspulenstruktur (31a) zu erhöhen.

2. Elektrowerkzeug (1) nach Anspruch 1, wobei der Stator (15a) einen Statorträger (21a) und eine Statorschirmschicht (23a) umfasst, wobei die Statorschirmschicht (23a) zwischen der Statorspulenstruktur (35a) und dem Statorträger (21a) angeordnet ist.

3. Elektrowerkzeug (1) nach Anspruch 2, wobei die Statorschirmschicht (23a) eine erste Ferritplatte ist.

4. Elektrowerkzeug (1) nach einem der vorstehenden Ansprüche, wobei der Rotor (15a) einen Rotorträger (21b) und eine Rotorschirmschicht (23b) umfasst, wobei die Rotorschirmschicht (23b) zwischen der Rotorspulenstruktur (31b) und dem Rotorträger (21b) angeordnet ist.

5. Elektrowerkzeug (1) nach Anspruch 4, wobei die Rotorschirmschicht (23b) eine zweite Ferritplatte ist.

6. Elektrowerkzeug (1) nach einem der vorstehenden Ansprüche, wobei der Stator (15a) ringförmig ist und den drehbaren Teil (11) aufnimmt, wobei die Statorspulenstruktur (31a) eine Spiralspule umfasst, die sich mit einer Vielzahl von Windungen, die sich radial nach außen winden, um den drehbaren Teil (11) erstreckt.

7. Elektrowerkzeug (1) nach einem der vorstehenden Ansprüche, wobei die Statorspulenstruktur (31a) einen Teil einer ersten flexiblen Leiterplatte, PCB, ausbildet.

8. Elektrowerkzeug (1) nach einem der vorstehenden Ansprüche, wobei der Rotor (15b) ringförmig ist und sich um den drehbaren Teil (11) erstreckt, wobei die Rotorspulenstruktur (31b) eine Spiralspule umfasst, die sich mit einer Vielzahl von Windungen, die sich radial nach außen winden, um den drehbaren Teil (11) erstreckt.

9. Elektrowerkzeug (1) nach einem der vorstehenden Ansprüche, wobei die Rotorspulenstruktur (31b) ein Teil einer zweiten flexiblen PCB ist.

10. Elektrowerkzeug (1) nach einem der vorstehenden Ansprüche, wobei sowohl die Rotorspulenstruktur (31b) als auch die Statorspulenstruktur (31a) eine Induktivität von mindestens 5 µH aufweist.

11. Elektrowerkzeug (1) nach einem der vorstehenden Ansprüche, wobei die stationäre elektronische Schaltung (17) eine Demodulatorschaltung umfasst, die dazu konfiguriert ist, das durch die Rotorspulenstruktur (31b) in der Statorspulenstruktur (31a) induzierte modulierte Messsignal zu demodulieren.

## Revendications

1. Outil électrique (1) comprenant :
- un logement (7),
- une partie fixe (9), qui est fixe par rapport au logement (7),
- une partie rotative (11), qui est rotative autour d'un axe de rotation (A) par rapport à la partie fixe (9), et
- un transformateur rotatif (15) comprenant :
un stator (15a) fixé à la partie fixe (11), le stator (15a) comprenant une structure de bobine de stator (31a), et
un rotor (15b) fixé à la partie rotative (11), le rotor (15b) comprenant une structure de bobine de rotor (31b) accouplée par induction à la structure de bobine de stator (31a),
**caractérisé en ce que :**
la structure de bobine de rotor (31b) et la structure de bobine de stator (31a) sont agencées avec un entrefer (29) entre eulles dans une direction le long de l'axe de rotation (A),
la partie fixe (9) comprend un ensemble de circuits électroniques fixes (17) connectés à la structure de bobine de stator (31a) et la partie rotative (11) comprend un ensemble de circuits électroniques rotatifs (19) connectés à la structure de bobine de rotor (31b).
l'ensemble de circuits électroniques rotatifs (19) comprend un capteur (37) et un circuit modulateur (35), dans lequel le circuit modulateur (35) est configuré pour moduler un signal de mesure reçu du capteur (37) pour obtenir un signal de mesure modulé, et pour fournir le signal de mesure modulé à la structure de bobine de rotor (31b) afin d'induire le signal de mesure modulé dans la structure de bobine de stator (31a),
l'ensemble de circuits électroniques fixes (17) comprend un circuit de transfert d'alimentation (41) configuré pour générer un signal d'alimentation et pour énergiser la structure de bobine de stator (31a) avec le signal d'alimentation afin d'induire un signal d'alimentation dans la structure de bobine de rotor (31b) destiné à alimenter l'ensemble de circuits électroniques rotatifs (19), et
l'ensemble de circuits électroniques rotatifs (19) comprend :
un capteur de tension (33) configuré pour mesurer une tension redressée du signal d'alimentation induit dans la structure de bobine de rotor (31b), dans lequel dans un cas où la tension redressée mesurée par le capteur de tension (33) est inférieure à une valeur seuil le circuit modulateur (35) est configuré pour générer un signal de mesure de capteur de tension modulé et l'alimenter à la structure de bobine de rotor (31b) pour induire le signal de mesure de capteur de tension modulé dans la structure de bobine de stator (31a), et
l'ensemble de circuits de commande (43) connectés à la structure de bobine de stator (31a), dans lequel l'ensemble de circuits de commande (43) est configuré pour commander le circuit de transfert d'alimentation (41) pour augmenter une force de signal du signal d'alimentation en réponse à la réception du signal de mesure de capteur de tension provenant de la structure de bobine de stator (31a).

2. Outil électrique (1) selon la revendication 1, dans lequel le stator (15a) comprend un support de stator (21a) et une couche de blindage de stator (23a), dans lequel la couche de blindage de stator (23a) est agencée entre la structure de bobine de stator (35a) et le support de stator (21a)

3. Outil électrique (1) selon la revendication 2, dans lequel la couche de blindage de stator (23a) est une première feuille de ferrite.

4. Outil électrique (1) selon l'une quelconque des revendications précédentes, dans lequel le rotor (15a) comprend un support de rotor (21b) et une couche de blindage de rotor (23b), dans lequel la couche de blindage de rotor (23b) est agencée entre la structure de bobine de rotor (31b) et le support de rotor (21b).

5. Outil électrique (1) selon la revendication 4, dans lequel la couche de blindage du rotor (23b) est une seconde feuille de ferrite.

6. Outil électrique (1) selon l'une quelconque des revendications précédentes, dans lequel le stator (15a) est annulaire et reçoit la partie rotative (11), dans lequel la structure de bobine de stator (31a) comprend une bobine en spirale s'étendant avec une pluralité de spires s'enroulant en spirale radialement vers l'extérieur autour de la partie rotative (11).

7. Outil électrique (1) selon l'une quelconque des revendications précédentes, dans lequel la structure de bobine de stator (31a) fait partie d'une première carte de circuit imprimé, PCB, flexible.

8. Outil électrique (1) selon l'une quelconque des revendications précédentes, dans lequel le rotor (15b) est annulaire et s'étend autour de la partie rotative (11), dans lequel la structure de bobine de rotor (31b) comprend une bobine en spirale s'étendant avec une pluralité de spires s'enroulant en spirale radialement vers l'extérieur autour de la partie rotative (11).

9. Outil électrique (1) selon l'une quelconque des revendications précédentes, dans lequel la structure de bobine de rotor (31b) fait partie d'une seconde PCB flexible.

10. Outil électrique (1) selon l'une quelconque des revendications précédentes, dans lequel chacune de la structure de bobine de rotor (31b) et de la structure de bobine de stator (31a) présente une inductance d'au moins 5 µH.

11. Outil électrique (1) selon la revendication 7, dans lequel l'ensemble de circuits électroniques fixes (17) comprend un circuit démodulateur configuré pour démoduler le signal de mesure modulé induit dans la structure de bobine de stator (31a) par la structure de bobine de rotor (31b).
